Europäisches Patentamt

European Patent Office

Office européen des brevets

(11) Publication number: **0 280 538**
A2

## (12) EUROPEAN PATENT APPLICATION

(21) Application number: 88301596.8

(22) Date of filing: 24.02.88

(51) Int. Cl.⁴: **B 60 P 1/06**
B 60 S 9/04, B 60 P 1/64

(30) Priority: 24.02.87 GB 8704257

(43) Date of publication of application:
31.08.88 Bulletin 88/35

(84) Designated Contracting States: DE FR GB

(71) Applicant: JONES, David John
27 Pant-y-Fid Road
Aberbargoed Mid Glam CF8 9DT (GB)

(72) Inventor: JONES, David John
27 Pant-y-Fid Road
Aberbargoed Mid Glam CF8 9DT (GB)

(74) Representative: Austin, Hedley William et al
Urquhart-Dykes & Lord Alexandra House 1 Alexandra
Road
Swansea West Glamorgan SA1 5ED (GB)

(54) A self tipping trailer.

(57) The trailer comprises a trolley 14 and a dumper body or skip 12 thereon. The skip has a plurality of supporting legs 30, which are movable from a first retracted position in which the skip is mounted on the trolley to a second, extended position, in which the skip can be removed from the trolley and the skip can be left free standing on the legs. The skip has an arcuate lower surface 42 which engages the trolley enabling the skip to roll along the trolley when required to perform a tipping operation.

Fig 1

## Description

A Self Tipping Trailer

This invention relates to a trailer, and more particularly to a demountable self tipping trailer.

A conventional trailer for use on building sites and the like, typically comprises a wheeled trolley which can be towed by a vehicle, and a dumper body which is mounted on the trolley.

According to the present invention there is provided a self tipping trailer comprising a wheeled trolley and a dumper body releasably mounted thereon, the dumper body being provided with a plurality of supporting members which are movable from a first retracted position in which the dumper body is mounted on the trolley to a second, extended position when said dumper body can be separated from the trolley, the dumper body being self tipping. Preferably the dumper body, hereinafter referred to as the skip, has four supporting members, one located substantially at each corner thereof. The dumper body can be held in the upright loading position by means of a locking mechanism which can be released when required by means of a mechanical lever. The dumper body has a shaped undersurface which engages the trolley enabling the skip to tip by rolling along the trolley when the locking mechanism has been released, thereby facilitating removal of the contents of the dumper body.

The trolley preferably has two rear wheels and a front jockey wheel, and a hitching device located at the front thereof to enable the trailer to be hooked onto the rear of a vehicle. Preferably the jockey wheel is connected to the trolley by means of a threaded bar, the threaded portion of which engages a threaded portion of the trolley framework. Rotation of the bar effectively raises or lowers the front of the trolley.

Preferably a locking mechanism is provided which retains the skip in an upright position on the trolley. The locking mechanism preferably comprises a mechanical lever attached to the trolley which engages a hook integral with the skip. The skip is preferably provided with guide members, each supporting member being slidable through one of said guide members.

The guide members are preferably hollow box sections integral with the skip having holes formed therein to receive retaining members which pass through corresponding holes in the supporting members.

The arcuate section of the skip is preferably provided with a plurality of locating studs which engage a series of holes formed in the rear of trolley to guide the skip when tipping.

The invention will now be described further by way of example only, with reference to and as illsutrated in the accompanying drawings, in which:

Figure 1 is a side view, partly in section, of a trailer in accordance with the invention;

Figure 2 is an end view of the skip along lines X-X in Figure 1;

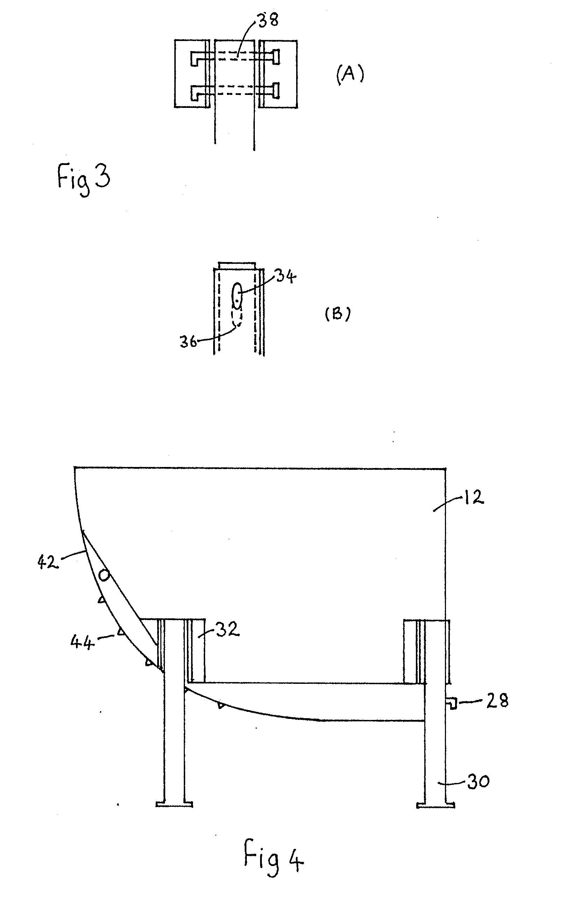

Figures 3(A) and 3(B) show how the supporting members may be retained;

Figure 4 is a part sectional side view of the skip; and

Figures 5 to 7 illustrate the method of demounting the skip from the trolley.

Referring to the drawings, a trailer 10 comprises a skip 12 and a trolley 14. The trolley is provided with two rear wheels 16 and a front jockey wheel 18. The jockey wheel 18 is attached to the trolley 14 by means of a threaded bar 20, the threaded portion of which engages a threaded hole in the trolley. Rotation of handle 22, which is integral with bar 20, effects raising and lowering of the front of the trolley. A hitching ring 24 enables the trailer to be hooked onto the rear of a vehicle. The trailer is also provided with a locking mechanism in the form of a mechanical lever 26 which engages a hook 28 fired to the end of the skip to maintain said skip in the upright position.

The skip 12 has four supporting members 30 which act as legs when said skip is demounted from the trailer. The supporting members are connected to the skip by means of guide members 32. The guide members are hollow box sections integral with the skip and the supporting members are able to slide therethrough. The guide members 32 are provided with holes 34 and supporting members 30 with holes 36, and retaining members 38 in the forms of pegs extend through aligned holes 34, 36 to retain said supporting members in the desired position. The two rear supporting members have a hole 40 therein through which pegs (not shown) can be inserted to secure the skip whilst the latter is in transit on the trolley. The skip has an arcuate external surface 42 provided with a series of locating studs 44 which engage with a corresponding series of holes 46 in the trolley when the skip is "rolled" along the trolley on external surface 42 to tip the contents of the skip. This ensures that the skip does not slide when tipping and consequently returns to its correct position after tipping. Jacks 48 can be used to elevate the skip 12 when the supporting members 30 are extended to give clearance so that the trolley 14 can be removed when the skip is to be free standing.

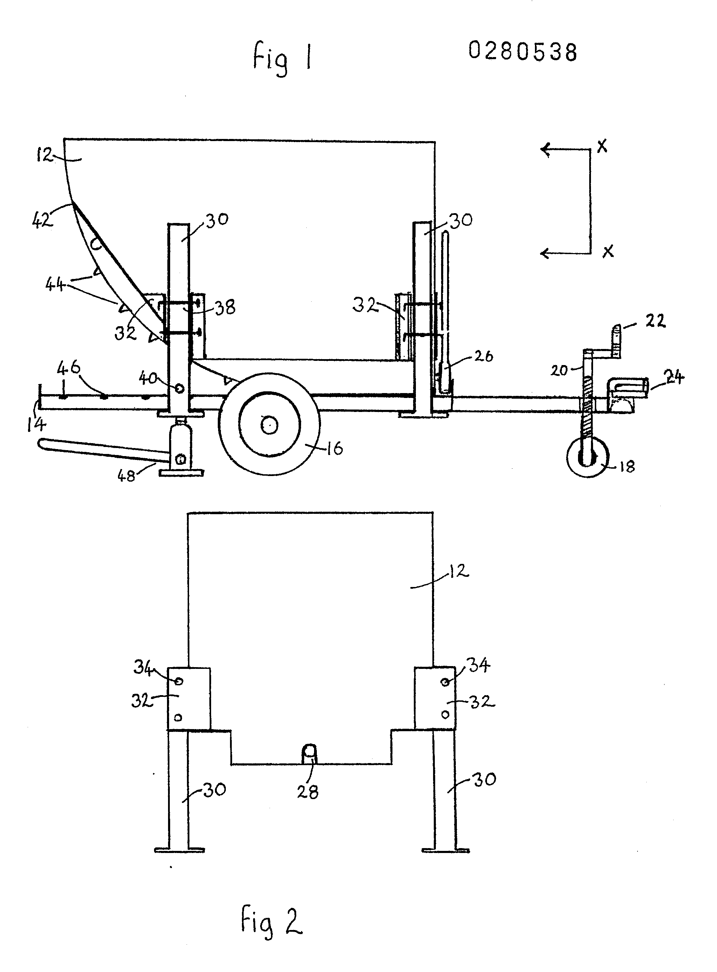

In the transit mode the trailer is as illustrated in Figure 1, with the supporting members retracted. When the contents of the skip are required to be removed, the lever 26 is released from hook 28; the centre of gravity of the skip and the concave nature of the external surface 42 are such that the skip can be rolled to the end of the trolley with very little manual effort and its contents tipped. That is, the skip is effectively counterbalanced, so that when it is evenly filled with a material of uniform consistency, it can readily be tipped by an operative applying manual pressure. No further power input is required. The pegs must of course, be removed from hole 40 in the supporting members prior to releasing the lever to allow tipping of the skip.

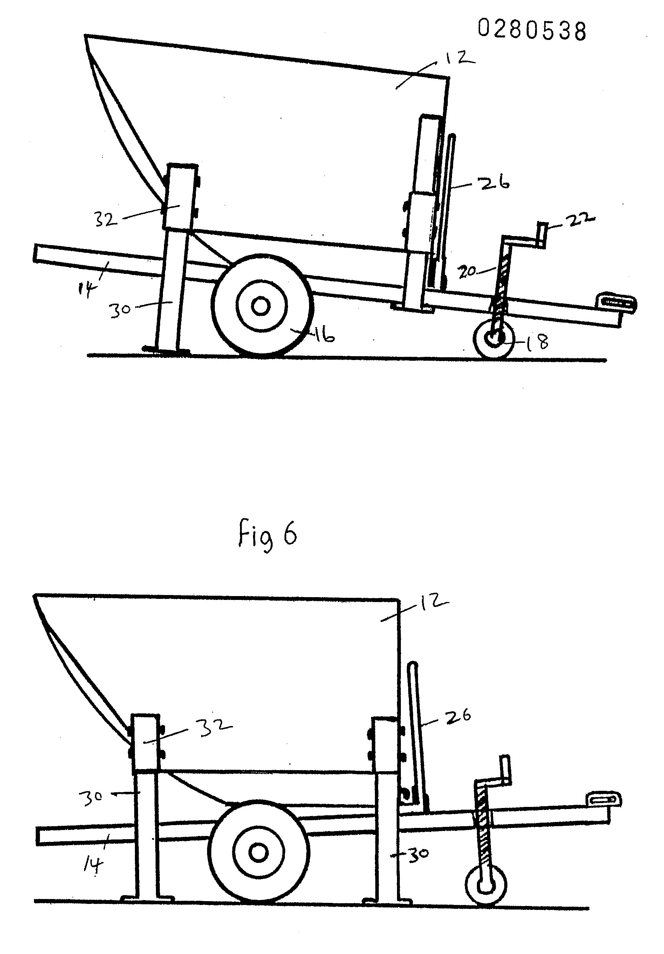

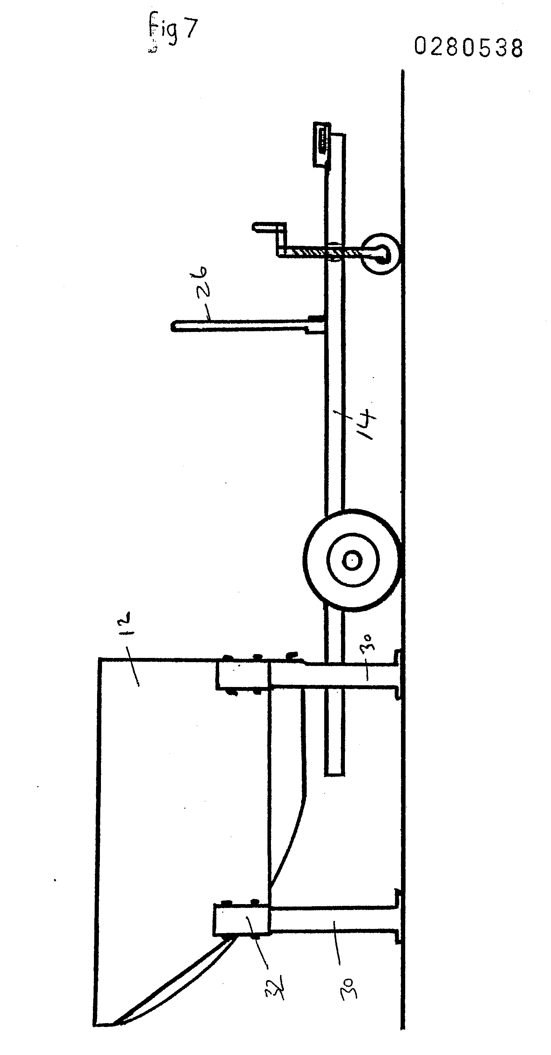

When the skip is required to be free standing and separate from the trolley, the handle 22 is rotated in a first direction so as to lower the front of the trolley, and hence raise the rear of the trolley. The rear supporting members 30 are then extended and held in place by pegs 38, as can be more clearly seen in Figure 5. The handle 22 is then rotated in the opposite direction so as to raise the front end of the trolley, as seen in Figure 6, and the front supporting members are extended. The handle 22 is then rotated again in the first direction so that the trolley returns to the normal horizontal position, whereupon it can be wheeled away as shown in Figure 7. If there is insufficient clearance for removal of the trolley, jacks 48 can be used to raise the skip to give the required clearance.

The invention provides an improved self tipping trailer, because it provides a skip which can be free standing, thus requiring less space than if the skip is retained on the trolley. Furthermore, since the trolley is removable it is able to be usefully used elsewhere on the site, for example, for transporting other skips to be emptied.

## Claims

1. A self tipping trailer comprising a trolley and a dumper body releasably mounted thereon, the dumper body being provided with a plurality of supporting members, which are moveable from a first retracted position in which said dumper body is mounted on said trolley to a second, extended position in which said dumper body can be separated from said trolley.

2. A trailer according to claim 1, in which the number of said supporting members is four, which supporting members are disposed in a rectangular array around said dumper body.

3. A trailer according to claim 1 or 2, in which said trolley has two rear wheels, a front jockey wheel, and a hitching device at the front thereof.

4. A trailer according to claim 3, in which said jockey wheel is connected to the trolley by means of an externally threaded bar, the threaded portion of which engages an internally threaded portion of the trolley whereby the front of the trolley can be selectively raised or lowered.

5. A trailer according to any of claims 1 to 4, in which a locking member is provided which is adapted to retain said dumper body in an upright (non-tipping) position on said trolley.

6. A trailer according to any of claims 1 to 5, in which said locking member comprises a mechanical lever attached to said trolley, which lever is arranged to engage a hook integral with said dumper body.

7. A trailer according to any of claims 1 to 6, in which said dumper body is provided with a guide member for each said supporting member, each said supporting member being slidable through a respective guide member.

8. A trailer according to claim 7, in which said guide member comprises a hollow box section having apertures therein for receiving retaining members arranged to pass through corresponding apertures in said supporting members.

9. A trailer according to any of claims 1 to 8, in which said dumper body has an external face adapted for a rolling action along said trolley for tipping of the contents of the dumper body.

10. A trailer according to claim 9, in which said dumper external face is provided with a plurality of locating studs arranged to engage a corresponding series of apertures located towards the rear of said trolley.

Fig 1

0280538

Fig 2

0280538

38

(A)

Fig 3

34

36

(B)

42

44

32

12

28

30

Fig 4

Fig 5

0280538

Fig 6

Fig 7

0280538